(19) Europäisches Patentamt
European Patent Office
Office européen des brevets

(11) Publication number: 0 408 811 A1

(12) EUROPEAN PATENT APPLICATION

(21) Application number: 89307435.1

(51) Int. Cl.[5]: A01N 63/00

(22) Date of filing: 21.07.89

(43) Date of publication of application:
23.01.91 Bulletin 91/04

(84) Designated Contracting States:
CH DE ES FR GB IT LI NL SE

(71) Applicant: KEMIRA OY
Espoon tutkimuskeskus, PL 44
SF-02271 Espoo(FI)

(72) Inventor: Raatikainen, Olavi
Kallionkierto 13 B 7
SF-70910 Vuorela(FI)
Inventor: Tuomisto, Jouko
Niuvantie 10 A
SF-70200 Kuopio(FI)
Inventor: Tahvonen, Risto
Kettutie 11
SF-31600 Jokioinen(FI)
Inventor: Lahdenpera, Marja-Leena
Pajalahdentie 10 B A 4
SF-00200 Helsinki(FI)
Inventor: Rosenqvist, Heikki
Vuorimiehenkatu 11 D 15
SF-00140 Helsinki(FI)
Inventor: Seiskari, Pekka
Vols
SF-02400 Kirkkonummi(FI)
Inventor: Suokas, Elias
Hakamaki 2 E 70
SF-02120 Espoo(FI)

(74) Representative: Collier, Jeremy Austin Grey et al
J.A.Kemp & Co. 14, South Square Gray's Innlnn
London WC1R 5EU(GB)

# (54) A fungistatic method.

(57) The present invention relates to a method for combatting plant diseases by treating the seed, the substrate or the vegetation with a Streptomyces griseoviridis actinomycete strain which produces aromatic heptaene-structured antibiotics.

EP 0 408 811 A1

# A FUNGISTATIC METHOD

The present invention relates to a method for combatting plant diseases by treating the seed, the substrate or the vegetation with a Streptomyces family micro-organism which produces an effective agent.

Efforts have been made to control plant diseases in greenhouses by using disinfection and replacement of the substrate and by means of various cultivation practices and control by chemicals. However, these methods are inconvenient, expensive and, as regards control by chemicals, introduce foreign substances into the environment. For this reason, increasing attention has begun to be paid to biological control methods. In particular, the control of plant diseases has been difficult owing to the restrictions of use of chemical control agents and hazard periods due to residues, and owing to a lack of sufficiently effective preparations.

In FI Patent Application 821 099 a method is used in which actinomycete fungi of the Streptomyces family are added to the soil in order to combat soil-borne and seed-borne diseases. These actinomycete fungi of the Streptomyces family either inhibit the action of diseases on the seed or restrict their spreading from a diseased seedling to a healthy seedling.

GB Patent 1 357 538 discloses a new antibiotic agent, which is believed to have action against plant diseases and is produced by means of the Streptomyces aureofaciens microbe. The effective agent is isolated from the mycelium of the micro-organism.

U.S. Patent 2,992,162 describes a method for producing a fungistatic antibiotic, candicidin, by using Streptomyces griseus.

It has now been surprisingly observed that a method in which a Streptomyces griseoviridis actinomycete strain, which produces aromatic heptaene-structured antibiotics, is added to the seed, the substrate or the vegetation is effective in the control of plant diseases.

It has now surprisingly been discovered that many strains of the actinomycete Streptomyces griseoviridis produce aromatic heptaene-structured antibiotics and can be added to seed, substrate, or vegetation, to control plant diseases caused by fungi.

S. griseoviridis is a known species of actinomycete which has been described in the literature, e.g. by Anderson et al , Antibiotics and Chemotherapy 6 (1956) 100-115 and Shirling et al , Int. J. Syst. Bact. (1986) 332, but which has not previously been described as producing aromatic heptaene-structured antibiotics. Several strains are available from depositories such as ATCC and DSM and the species can also be isolated from peat in known manner. While not all strains of S. griseoviridis produce aromatic heptaene-structured antibiotics, a substantial proportion do, and the latter can easily be identified by analysis of their metabolic products, e.g. using the techniques described in the Examples below. The strains ATCC 39271, 39272 and 39273, which are freely available to the public, can for example be used in the present invention.

According to the literature, antibiotic macrocyclic aromatic heptaenes have a general structure of the following type

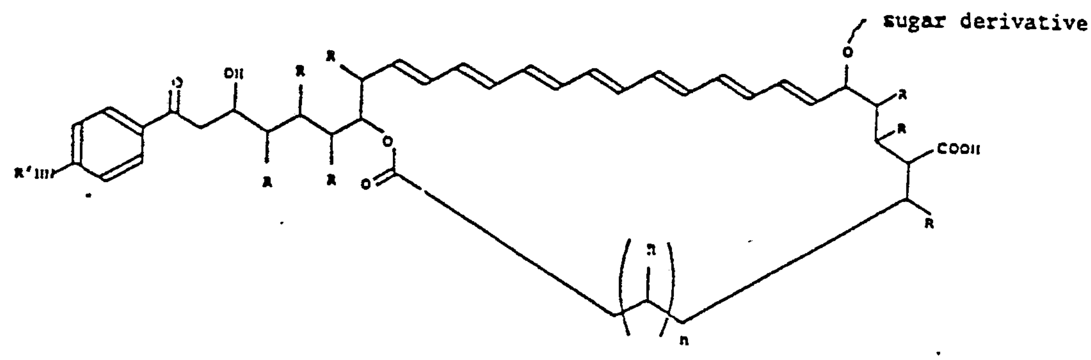

where R is variably $CH_3$, OH, H or a keto group, and $R' = CH_3$ or H

It is known that aromatic heptaenes have fungistatic action.

In the method according to the invention, the effective agent need not be isolated from the mycelium of the Strep tomyces griseoviridis which produces it; instead, in plant disease control an aqueous suspension of S. griseoviridis is added to the seed, the substrate or the vegetation, at a minimum concentration of $10^4$ spores/ml and at a minimum rate of 1 $dl/m^2$, which makes the method economical and simple to use. The S. griseoviridis which produces aromatic heptaenes has been observed to be effective against at least the

following pathogens: Alternaria brassicicola, Rhizoctonia solani, Fusarium culmorum, F. oxysporum, Agrobacterium tumefaciens, Pythium sp., Botrytis cinerea, Phomopsis sclerotioides. The Streptomyces griseoviridis strains used in the examples were isolated from Finnish sphagnum peat using known techniques. The invention is described below in greater detail with the help of examples.

Example 1

Isolation of the effective agent

A method commonly used for the isolation of effective agents and antibiotics is direct extraction from a cell mass and/or a culture solution, whereafter the extract is concentrated and purified. S. griseoviridis was fermented on a medium which contained glucose 4 g/l, yeast extract 4 g/l, and malt extract 10 g/l, and the cell mass was separated.

Acetonitrile at 0.5 - 1 part per volume was added to the cell mass or the culture solution, and the mixture was shaken. The formed suspension was centrifuged for 10 min at about 3000 rpm. The supernatants were combined and evaporated almost dry. The syrup-like residue was suspended in water and, after adjustment of the pH to 3.0 by means of HCl, an equal volume of acetonitrile was added to it and the mixture was shaken. NaCl at 80 g/l was added to the mixture, whereupon most of the acetonitrile separated as a supernatant. The lower phase was further extracted using acetonitrile at 0.5 parts per volume, and the supernatants were combined. The supernatants were washed, when so desired, with NaOH. The supernatants (pH 7) were evaporated dry in a circular evaporator and were dissolved in methanol (10-20 ml). The obtained solution was transferred into a test tube and concentrated in a nitrogen flow to about 1 ml, whereupon a precipitate formed at the bottom of the tube. 1 ml of methanol was added into the tube, whereupon the major proportion of the effective agent dissolved and most of the precipitate remained undissolved. The clear dark brown solution was chromatographed in a Sephadex LH20 gel column.

Example 2

Purification of the effective agent

The isolated effective agent was purified column chromatographically by using a Sephadex LH-20 column. The eluent used was a phosphate buffer (0.06 M, pH 7.2), to which methanol (0-100 %) was added in stages. The mixture was eluted at a flow rate of 0.4 - 0.6 ml/min. Fractions of 2 or 4 ml were collected, on which the efficacy against Fusarium or Alternaria was determined. In addition, the absorbances of the fractions were measured using a characteristic wavelength of 254 nm for impurities and 380 nm for the effective agent, and a chromatogram was plotted, which shows $A_{254}$ or $A_{380}$ as a function of the fraction number (Figure 1).

Example 3

Thin-layer chromatographic analysis (TLC)

To evaluate the purity of the isolated fractions and, on the other hand, for bioautography and an HPLC analysis, a thin-layer chromatographic separation method was used. A thin-layer chromatographic analysis was performed by using silica 60 as the stationary phase material and a solution of chloroform, ethanol and water 50:50:8 as the mobile phase. The thin layers were examined in visible light and in UV light, and the Rf values of the effective agent were determined bioautographically. In bioautography the effective agent is localized in a thin layer by casting onto the surface of the layer a nutrient agar layer which contains the test organism (Alternaria brassicicola) and by incubating it thereafter at 28 °C. The result was read after 3-4 days, at which time the place of the effective-agent spot was seen as an area where the test organism did not grow. The Rf value obtained for the effective agent preparation run through the Sephadex LH-20 column

was 0.33.

For a liquid chromatographic analysis of the effective agent, a preparative layer chromatography was performed in the same manner as the analytical layer chromatography. The Rf values of the separated fractions were measured, and from the area of each Rf value a specimen was scratched from which the effective agent was extracted by means of tetrahydrofuran or a mixture of acetonitrile and water (50:50). The extract was used for the testing of the efficacy and for liquid chromatographic evaluation.

Example 4

High-pressure liquid chromatography (HPLC)

Liquid chromatography was performed using a Bischoff ODS Hypersil RP-18 reverse phase column and isocratic elution. The eluent used was aqueous EDTA or ammonium acetate mixed with acetonitrile or tetrahydrofuran. The reference agent used was amphotericin B, which is a compound similar to the effective agent produced by actinomycete fungus, although it is by type a non-aromatic heptaene. The chromatogram of the effective agent is shown in Figure 2. The principal components of the effective agent are indicated by letters A, B and C. What is involved is a multi-component polyene mixture in which all of the separated polyene components are, according to the UV spectra, heptaenes.

The effective agent decomposes when treated with UV light. The polyene peaks visible in the HPLC disappeared in the analysis of the UV-treated samples, i.e. in UV treatment the effective agent had lost its activity, since the HPLC of the ineffective agent did not show the peaks characteristic of the effective agent; from this it can be concluded that the efficacy is associated with the said polyene structure.

Example 5

UV and IR spectra of the effective agent

The ultraviolet spectrum of the effective agent is highly characteristic of heptaene polyene. The UV spectrum of the effective agent mixture (40 µg/ml in dimethyl sulfoxide) extracted from the actinomycete preparation is shown in Figure 3. Judging from the UV spectrum, the effective agent components contain 7 conjugated double bonds, forming a structure typical of heptaene, in which the wavelength maxima are at $\lambda$ values of approximately 368, 388 and 412 (with DMSO as the solvent).

The characterization of the effective agent by using IR was carried out on the crystalline material which had been obtained from the concentrate of the solution extracted from the cell mass and which was purified by extracting it with various solvents.

The infrared spectrum shows absorption within the carbonyl range 1750 - 1500 $cm^{-1}$ (Figure 4).

Example 6

Demonstration that the effective agent is aromatic

According to articles published in scientific publication series, whether or not a heptaene is aromatic can be demonstrated at least by hydrolyzing the heptaene with an alkali and by detecting the released para-aminoacetophenon (PAAP), or by detecting the linking of para-aminobenzoic acid (PABA) to the effective-agent molecule in biosynthesis. The PABA-labeling can be detected, for example by using a radioactive PABA and by detecting the radioactivity from the effective-agent molecule. The results of the hydrolysis test and the radioactivity of the effective agent labeled with radioactive PABA are described below.

Demonstration of para-aminoacetophenon in a heptaene complex

Principle: A small quantity of isolated heptaene complex was alkali hydrolyzed and extracted using chloroform. Para-aminoacetophenon (PAAP) was isolated from the chloroform extract by using a semi-preparative HPLC column, and PAAP was demonstrated in the isolated fraction by a gas chromatography - mass spectrometry technique by observing selectively the signals corresponding to a molecular weight of 135. The analysis results showed that an alkali treatment of the effective agent complex released para-aminoacetophenon into the solution. This could be detected on the basis of the retention times and mass spectra (Figure 5). Figure 5 depicts the GC-mass chromatogram (A) of the fraction corresponding to para-aminoacetophenon isolated by using HPLC and the mass spectrum (B) corresponding to the GC retention time of PAAP.

Detection of radioactive $^{14}C$-PABA in the effective agent

Principle: The strain 61 was grown in YMG medium (composition as in Example 1), and at the beginning of the culture, $^{14}C$-PABA 500000 - 1500000 dpm/culture was added to the medium (2 ml). The test tubes were shaken for about 50 h at 28 °C, whereafter the effective agent was extracted from the cell mass. The effective agent contents of the cell mass extracts and the culture medium were measured. The transfer of the radioactivity into the effective agent during the biosynthesis was verified by determining the radioactivity of the effective agent by an HPLC detector (Radiomatic) which measures radioactivity. The results of the labeling are shown in Table 1. Figure 6 shows a typical radiochromatogram, in which the first peak represents $^{14}C$-PABA, and the next wide peak the effective agent. The chromatograms show that the radioactivity was incorporated into the effective agent, thus indicating that the effective agent was aromatic. The chromatogram also shows that evidently all the effective agent components were labeled and were thus aromatic.

Table 1

| Sample No. | $^{14}C$-PABA added[1] | Yield of effective agent | Activity of effective agent | Specific activity | Efficacy of labeling |
|---|---|---|---|---|---|
| | (dpm) | µg/culture | (dpm/extract) | (cpm/µg) | % |
| 1 | 504000 | 31 | | | |
| 2 | 1009000 | 187 | 378000 | 510 | 38 |
| 3 | 1513000 | 163 | 510000 | 390 | 34 |

1) Incubation medium activity, of which part becomes incorporated into the effective agent. The labeling efficacy has been calculated on the basis of the ratio of the activity of the formed effective agent to the added activity.
Yield of effective agent = effective agent quantity µg/g of cell mass
Specific activity = dpm quantity/effective agent quantity per one gram of cells
Activity (dpm) = dpm reading calculated from the cpm reading by using the calculated efficacy (65.2 %)

The results of the labeling tests show that part of the radioactivity passed into the effective agent. According to the radiochromatogram, the effective agent was labeled with $^{14}C$-activity, but part of the PABA remained free and had been extracted from the cell mass along with the effective agent. Thus the ratio of the activity of $^{14}C$-PABA to that of labeled effective agent in the cell mass extract was about 0.56. In addition, considerable amounts of unincorporated PABA were found in the culture media - about 1.7-fold compared with the extracts. In total 622000 dpm (sample 2) and 840000 (sample 3), i.e. 61 % and 55 % of the activity added to the culture, were found in the analyzed samples by the method used. The balance of the activity had most likely been left unextracted in the cell mass (the activity was not measured).

The results show that the effective agent was labeled and, on the basis of existing published research data, it can be concluded that the radioactivity was linked to the effective agent molecule by the mediation of an aromatic side group (para-aminoacetophenon). Thus it is evident that the actinomycete strain studied produces aromatic heptaene.

Example 7

Solubility of the effective agent

The solubility, in different solvents, of the evaporation residues extracted from the cell mass which contained effective agent was studied by adding the solvent studied in 0.1 ml batches to 2 mg of the precipitate.

The effective agent dissolved in water-containing polar organic solvents such as aqueous solutions of acetonitrile, methanol, acetone, and tetrahydrofuran and, in addition, in DMSO.

Example 8

Efficacy of the effective agent precipitates isolated

The isolated and freeze-dried effective agents were dissolved in dimethyl sulfoxide (DMSO) at 1 mg/ml, and their MIC value (minimal inhibitory concentration) was measured by the solution dilution method. The results are shown in Table 2.

Table 2

| Efficacy of certain isolated heptaene complexes and reference agents, as evaluated using the MIC value (µg/ml) | | | | | |
|---|---|---|---|---|---|
| Solution dilution test | | | | | |
| Test organism | TA 52 | TA 54 | TA5411 | Can | AmB |
| Candida albicans Tu 96942 | 0.62<br>1.25<br>0.62 | 0.16<br>0.31<br>0.16 | 0.16<br>0.31<br>0.16 | 0.08<br>0.16<br>0.08 | 0.31<br>0.31<br>0.62 |
| Fusarium culmorum | 6.25<br>6.25 | 0.39<br>0.78 | 0.39<br>0.78 | 0.20<br>0.39 | 1.56<br>3.12 |
| Can = Candicidin, AmB = Amphotericin B | | | | | |

According to the solution dilution test, effective agent preparations TA 54 and TA 5411 (both obtained from the organic phase washed by means of alkali) are almost as effective as candicidin and somewhat more effective than amphotericin B.

The MIC value of an isolated precipitate as a function of their polyene content (sum of the heights of the peaks in HPLC analysis) gives an idea of the purity of the preparation as compared with candicidin (Figure 7). The figure shows clearly how the polyene content increases as the efficacy increases (MIC value decreases). Of the isolated effective agents, in their purity TA 54 and TA 5411 seem to be almost in the order of candicidin, which was used as the reference agent.

Example 9

The action of S. griseoviridis and other actinomycete strains (1-10) on the Alternaria damping off of cauliflower on a peat substrate and the production of effective agent by these strains in a liquid culture were studied. The seeds were contaminated with Alternaria and were treated with aqueous suspensions of different actinomycete strains ($10^6$ spores/ml). The results are shown in Table 3. The reference strains 8-10 could also be S. griseoviridis actinomycete strains.

Table 3

| Strain | Viable seedlings, | Disease control efficacy, | Disease index* | Yield of effective agent | |
|---|---|---|---|---|---|
| | % | % | (0 - 2) | µg/ml | µg/ml/g of cell mass |
| S. griseoviridis | | | | | |
| 1 | 85.3 | 97 | 0.47 | 84.0 | 265.1 |
| 2 | 86.7 | 99 | 0.22 | 45.8 | 199.9 |
| 3 | 83.3 | 95 | 0.25 | 91.1 | 335.1 |
| 4 | 80.7 | 91 | 0.30 | 44.6 | 154.2 |
| 5 | 77.3 | 87 | 0.47 | 172.7 | 633.6 |
| 6 | 82.7 | 94 | 0.30 | 51.7 | 120.3 |
| 7 | 80.7 | 91 | 0.36 | 43.5 | 175.5 |
| reference strains | | | | | |
| 8 | 42.0 | 40 | 1.28 | 0.7 | 2.3 |
| 9 | 7.3 | 5 | 1.81 | 1.11 | 11.9 |
| 10 | 36.7 | -17 | 1.08 | 0.14 | 1.3 |

* 0 = healthy, 1 = diseased, 2 = dead

The disease control efficacy was calculated according to the formula:

$$\text{control efficacy} = \frac{\text{treatment - contaminated reference}}{\text{healthy ref. - contaminated ref.}}$$

The table shows that the strains which produce the effective agent provide a high control efficacy.

Example 10

The action of S. griseoviridis actinomycete strains (strains 1, 4 and 5), which produce effective agent, on the Rhizoctonia damping off of oilseed rape was studied on a steamed soil substrate. The substrate was contaminated with Rhizoctonia and the seeds were treated with an aqueous actinomycete suspension (concentration $10^6$ spores/ml). The results are shown in Table 4.

Table 4

| Strain | Control efficacy, % |
|---|---|
| 1 | 54 |
| 4 | 62 |
| 5 | 79 |

The Rhizoctonia damping off of oilseed rape is difficult to control, and there exists no proper chemical control method against it. Thus the results obtained by the method according to the invention are very good.

Example 11

Control by chemicals, which had not been sufficient, had been used on carnations. The control of the Fusarium wilt of carnation by means of S. griseoviridis (strains 1 and 2) was studied. The experiment was carried out in a commercial greenhouse cultivation on a peat substrate. The results are shown in Table 5.

Table 5

| | Wilted carnations | |
|---|---|---|
| | % of the area | |
| Treatment | Strain 1 | Strain 2 |
| 1 | 36.7 | 45.1 |
| 2 | 20.0 | 12.0 |
| 3 | 20.0 | 24.1 |
| 4 | 1.3 | 22.1 |
| 5 | 0 | 9.4 |

Treatments:

1 untreated reference
2 spraying with a 1 % actinomycete suspension ($10^5$ spores/ml) twice during the growing season
3 root dipping in a 1 % suspension before planting, and spraying with a 1 % suspension twice during the growing season
4 root dipping in a 1 % suspension, and spraying with a 0.1 % suspension ($10^4$ spores/ml) twice during the growing season
5 root dipping and spraying once a month, both with a 1 % suspension

Example 12

The effect of a number of different Streptomyces griseoviridis strains on the crop of oilseed rape was studied in a field test. The results are shown in Table 6.

Table 6

| | Seedlings | Crop | |
|---|---|---|---|
| Strain | number/$m^2$ | kg/hectare | Ratio |
| untreated | 30 | 2750 | 100 |
| 2 | 25 | 2900 | 105 |
| 3 | 30 | 2870 | 104 |
| 4 | 30 | 2870 | 104 |
| 5 | 32 | 2900 | 105 |
| 7 | 33 | 2950 | 107 |

The numbering of the actinomycete strains mentioned in Examples 10 - 12 corresponds to the numbering in Table 3 of Example 9.

## Claims

1. A method for combatting plant diseases and plant storage diseases, **characterized** in that the seed, the

substrate or the vegetation is treated by adding to it a Streptomyces griseoviridis actinomycete strain which produces an aromatic heptaene-structured antibiotic .

2. A method according to Claim 1, **characterized** in that the S. griseoviridis strain is added as a suspension to the seed, the substrate or the vegetation.

3. A method according to Claim 1 or 2, **characterized** in that the S. griseoviridis strain is added as a suspension which contains at least approximately $10^3$ spores/ml.

4. A method according to Claim 3, **characterized** in that the S. griseoviridis strain is applied to the substrate at a rate of at minimum 1 dl/$m^2$.

5. A method according to Claim 1, 2 or 3, **characterized** in that the S. griseoviridis strain is added by root dipping the seedlings in an actinomycete suspension before being planted and/or by spraying the vegetation with an actinomycete suspension.

FIG. 1

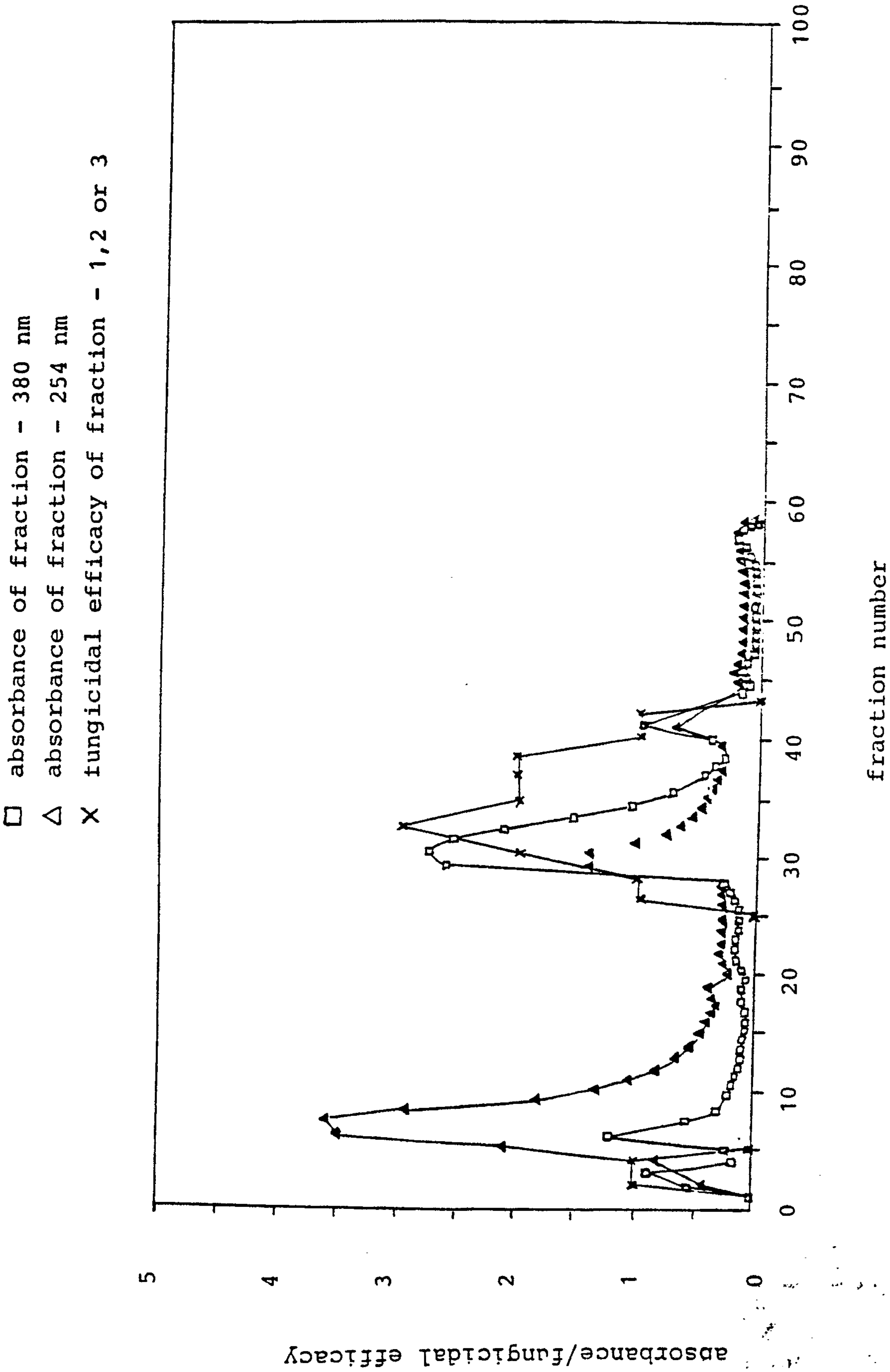
□ absorbance of fraction - 380 nm
△ absorbance of fraction - 254 nm
X fungicidal efficacy of fraction - 1,2 or 3
absorbance/fungicidal efficacy
0
1
2
3
4
5
fraction number
0
10
20
30
40
50
60
70
80
90
100

FIG. 2

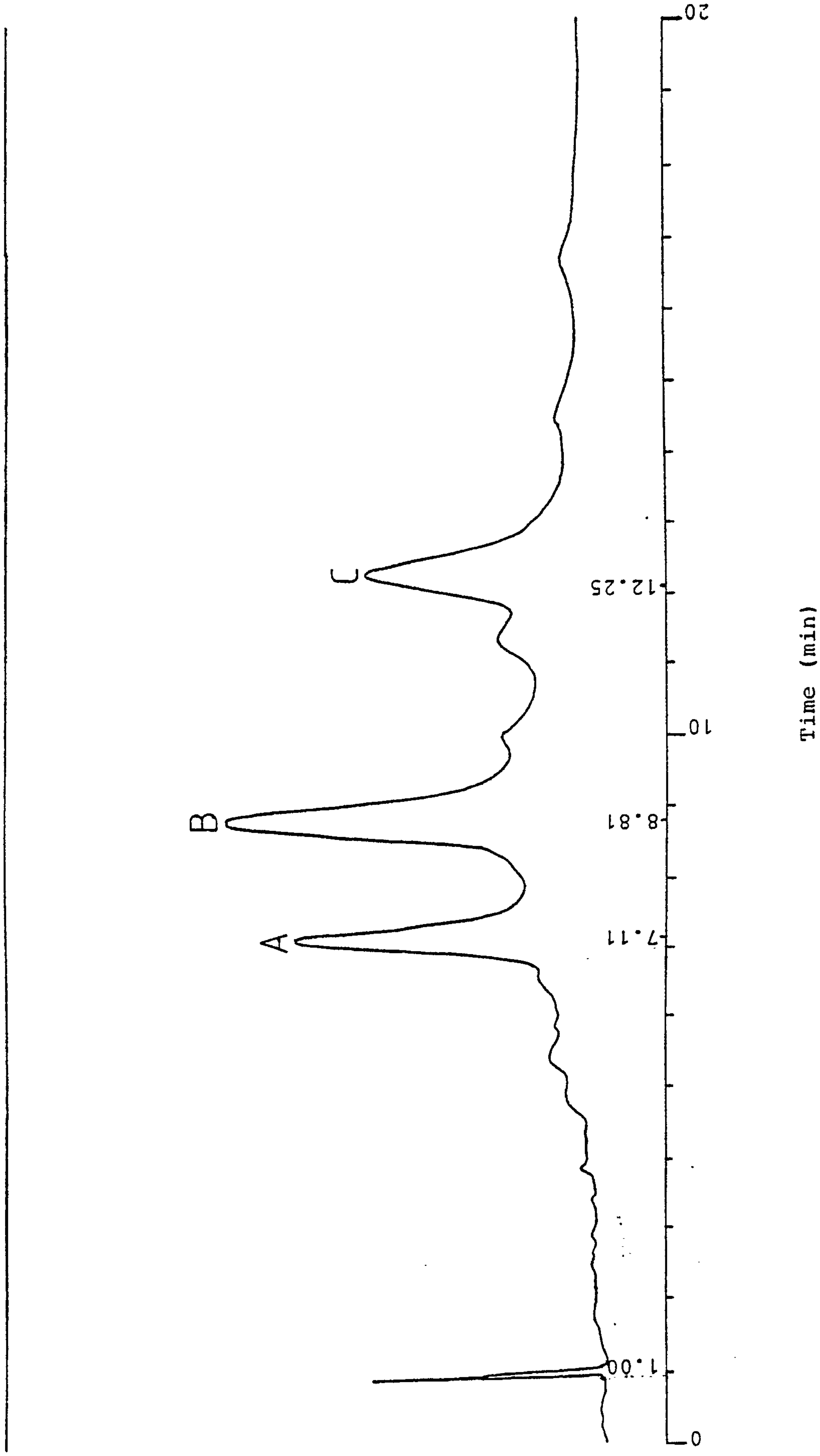

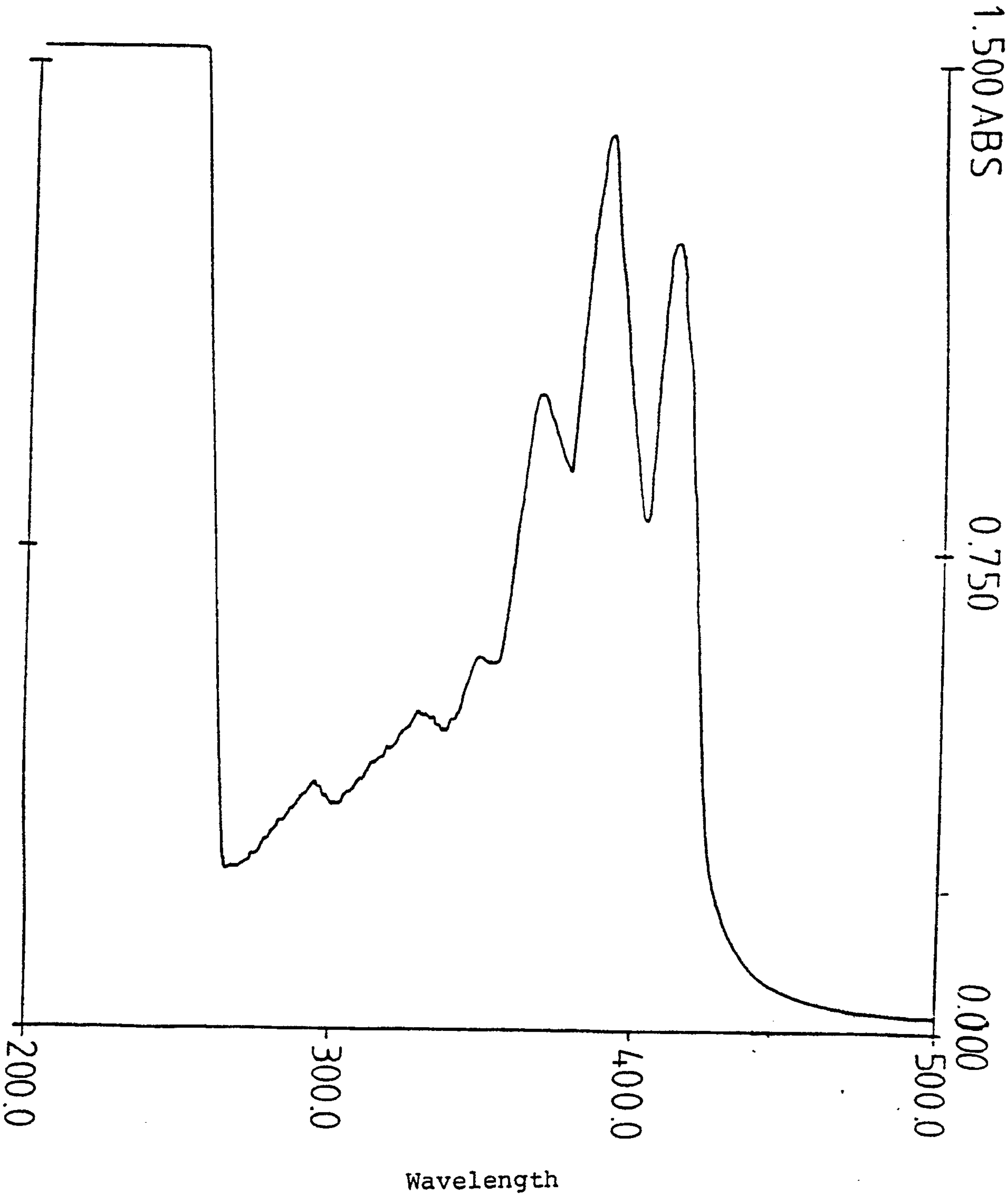


FIG. 3

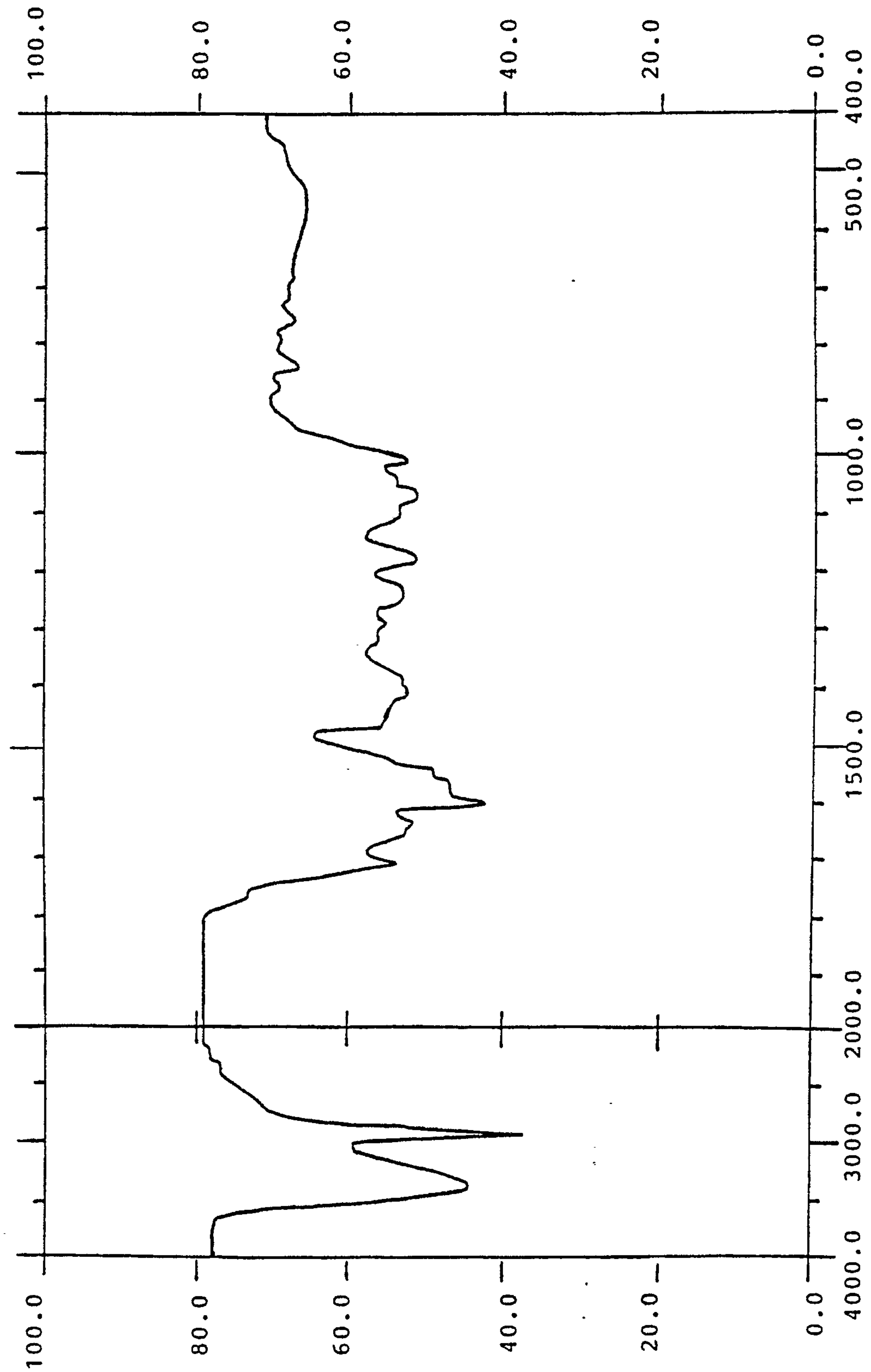
100.0
80.0
60.0
40.0
20.0
0.0
400.0
500.0
1000.0
1500.0
2000.0
3000.0
4000.0

FIG. 4

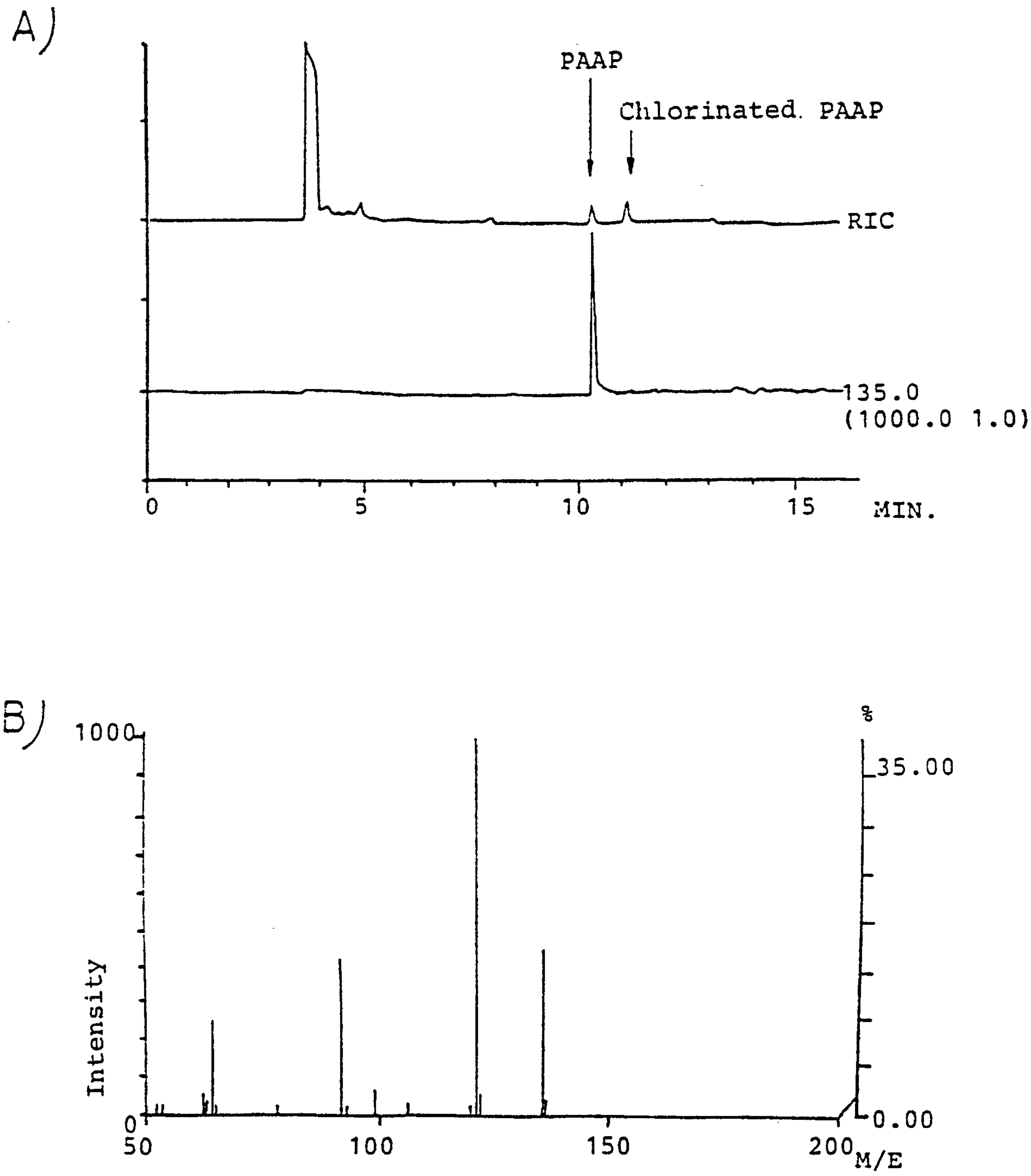
A)
PAAP
Chlorinated. PAAP
RIC
135.0
(1000.0 1.0)
0
5
10
15
MIN.
B)
1000
0
Intensity
%
35.00
0.00
50
100
150
200
M/E

FIG. 5

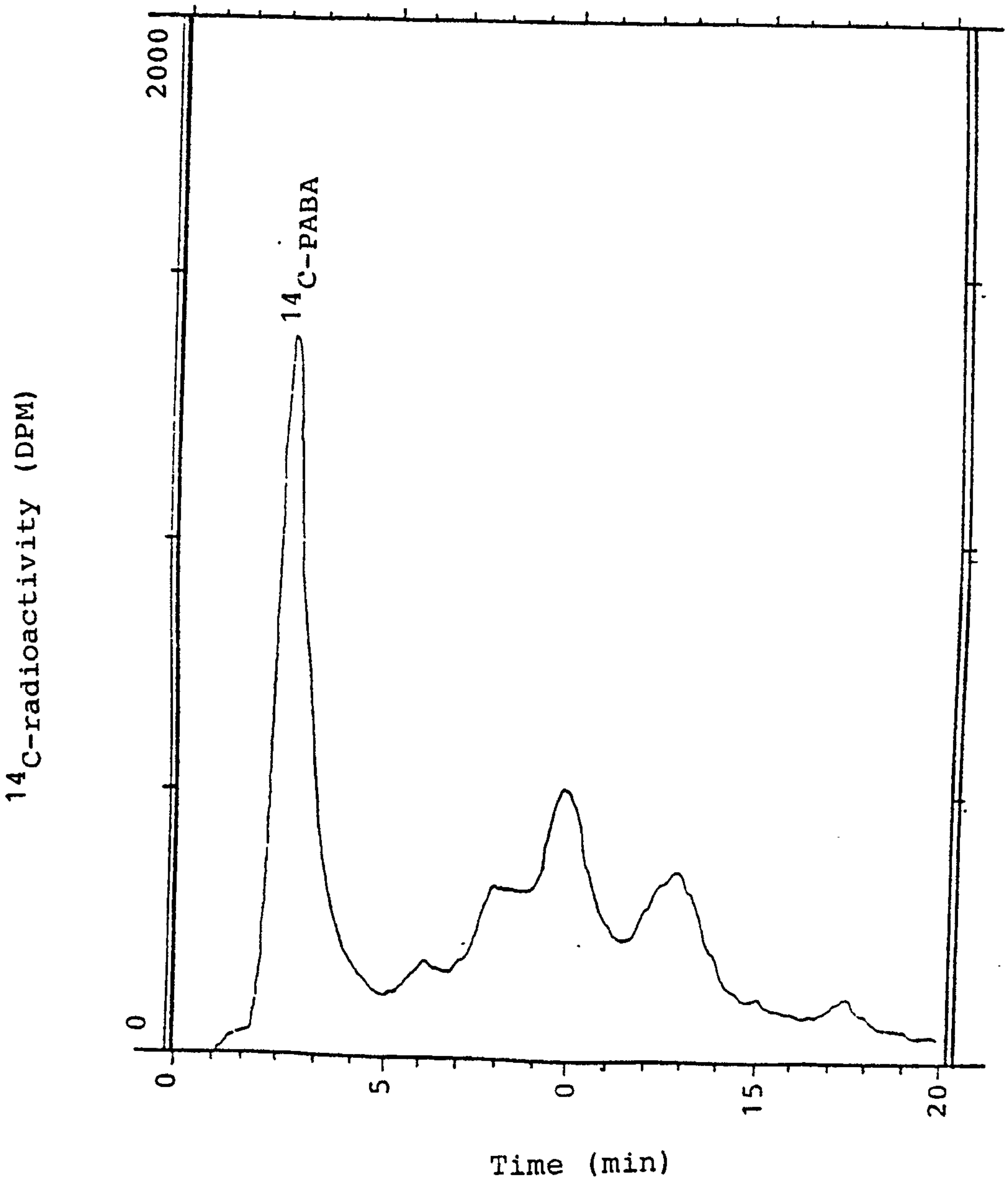


FIG. 6

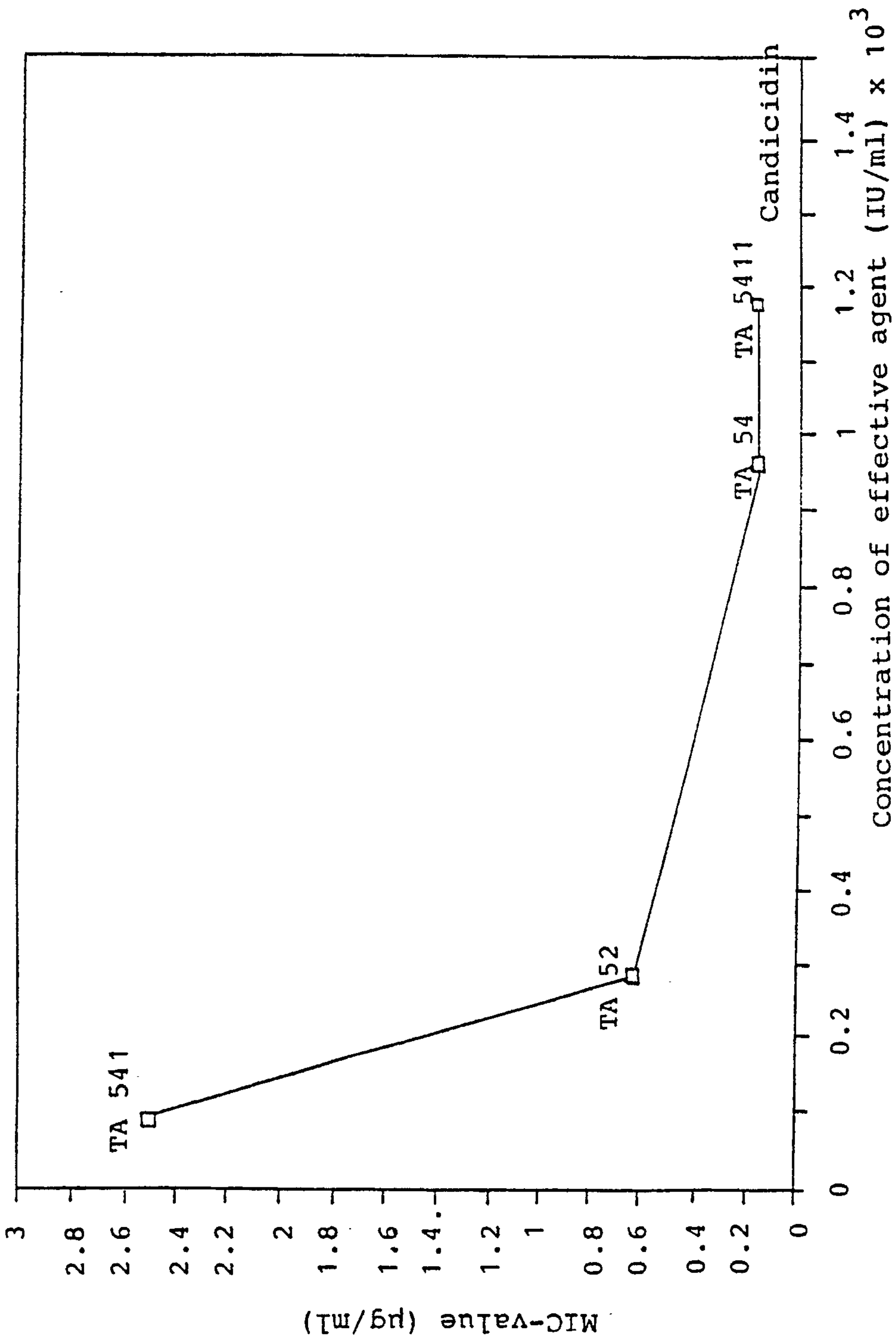
MIC-value (µg/ml)
0
0.2
0.4
0.6
0.8
1
1.2
1.4
1.6
1.8
2
2.2
2.4
2.6
2.8
3
Concentration of effective agent (IU/ml) x $10^3$
0
0.2
0.4
0.6
0.8
1
1.2
1.4
TA 541
TA 52
TA 54
TA 5411
Candicidin

FIG. 7

European Patent Office

# EUROPEAN SEARCH REPORT

Application Number

EP 89 30 7435

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 595 589 (TAHVONEN) * Column 1, lines 24-26,48-56; claims 1-5 * & FI-A-8 210 099 (KEMIRA OY) (Cat. D) --- | 1-5 | A 01 N 63/00 |
| A | US-A-3 773 925 (T. BRUZZESE et al.) *Abstract; column 1, lines 41-47 * & GB-A-1 357 538 (Cat. D) --- | 1-5 | |
| D,A | US-A-2 992 162 (A. SELMAN et al.) * Column 1, lines 40-50 * ----- | 1-5 | |
| | | | TECHNICAL FIELDS SEARCHED (Int. Cl.5) |
| | | | A 01 N |

The present search report has been drawn up for all claims

| Place of search | Date of completion of the search | Examiner |
|---|---|---|
| THE HAGUE | 29-03-1990 | RAVANEL C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document